# EUROPEAN PATENT APPLICATION

(11) **EP 1 780 253 A2**
(43) Date of publication of application: **02.05.2007**
(21) Application number: 06255613.9
(22) Date of filing: 01.11.2006
(51) Int. Cl.: C09J 127/00

(54) **Adhesive composition**

(30) Priority: 01.11.2005 JP 2005318125
(71) Applicant: Shin-Etsu Chemical Co., Ltd., Tokyo (JP)
(72) Inventor: Shiono, Mikio, Silicone-Electronics Mat. Res. Ctr., Annaka-shi, Gunma-ken (JP)
(74) Representative: Stoner, Gerard Patrick

(57) **Abstract**

An adhesive composition comprises (A) a linear polyfluoro compound containing alkenyl groups and having a perfluoropolyether structure backbone, (B) a fluorine-bearing organohydrogensiloxane, (C) a platinum compound, (D) a hydrophobic silica powder, (E) an isocyanurate having an epoxy and/or trialkoxysilyl group, (F) an organosiloxane containing an SiH group and an epoxy and/or trialkoxysilyl group, and (G) a carboxylic anhydride. The composition cures into a fluoroelastomer having excellent characteristics and achieves a firm adhesion to a broad range of metal and plastic substrates by brief heating at relatively low temperatures.

## Description

This invention relates to adhesive compositions which cure into fluoroelastomers and which adhere firmly to various types of substrates including metals and plastics, especially magnesium alloys, aluminum and aluminum alloys, during curing.

### BACKGROUND

Fluoroelastomer compositions which can be cured by an addition reaction between alkenyl groups and hydrosilyl groups are known in the art. Related compositions imparted with self-adhesiveness by additionally including, as a third component, an organopolysiloxane bearing hydrosilyl groups and epoxy and/or trialkoxysilyl groups, have also been proposed (JP-A 9-95615). Addition of carboxylic anhydride to these compositions results in compositions with improved adhesion to polyphenylene sulfide resins and polyamide resins as disclosed in JP-A 2001-72868 and JP-A 2002-105319. These compositions can be cured by a short period of heating to give cured products having excellent gasoline resistance, solvent resistance, oil resistance, chemical resistance, heat resistance and low-temperature properties, low moisture permeability and excellent electrical characteristics. Such compositions are used in adhesive applications within a variety of fields where these properties are required. They see particularly frequent use in sealing applications for electrical and electronic components in the automotive industry.

Although the foregoing compositions are fully adherent to a wide variety of substrates, they provide insufficient adhesion to magnesium alloys, aluminum and aluminum alloys when heated at relatively low temperatures. In an application of the composition as the gasket material to intake manifolds of Mg alloy in automobile engines, for example, where high-temperature heating must be avoided from the considerations of dimensional precision and residual strain of the manifolds, the composition fails to provide sufficient adhesion, posing a problem of deficient seal. In the relevant application, the gasket material must also have low gasoline permeability. It would be desirable to have a liquid fluoroelastomer adhesive composition capable of achieving firm adhesion to magnesium alloys, aluminum and aluminum alloys by heating at relatively low temperatures.

It is therefore an object herein to provide new and useful adhesive compositions, curable to fluoroelastomers preferably having excellent gasoline resistance, solvent resistance, oil resistance, chemical resistance, heat resistance, low-temperature properties, low moisture permeability, and excellent electrical characteristics, and which desirably achieve a firm adhesion to Mg alloys, Al, and Al alloys by brief heating at relatively low temperatures.

The inventors have discovered that they can achieve such useful properties using an addition reaction-curable composition comprising (A) a linear polyfluoro compound containing at least two alkenyl groups and having a perfluoropolyether structure in the backbone, (B) a fluorine-bearing organohydrogensiloxane containing at least two silicon-bonded hydrogen atoms, and (C) a platinum group compound, to which are added (D) a hydrophobic silica powder, (E) an isocyanurate having at least one epoxy and/or trialkoxysilyl group which is bonded to a nitrogen atom via a carbon atom, (F) an organosiloxane containing at least one silicon-bonded hydrogen atom and at least one epoxy and/or trialkoxysilyl group which is bonded to a silicon atom via a carbon atom or carbon and oxygen atoms, and (G) a carboxylic anhydride.

Accordingly, the present invention provides an adhesive composition comprising
(A) a linear polyfluoro compound containing at least two alkenyl groups per molecule and having a perfluoropolyether structure in the backbone,
(B) a fluorine-bearing organohydrogensiloxane containing at least two silicon-bonded hydrogen atoms per molecule,
(C) a platinum group compound,
(D) a hydrophobic silica powder,
(E) an isocyanurate having per molecule at least one group selected from among epoxy and trialkoxysilyl groups which is bonded to a nitrogen atom via a carbon atom,
(F) an organosiloxane containing per molecule at least one silicon-bonded hydrogen atom and at least one group selected from among epoxy and trialkoxysilyl groups which is bonded to a silicon atom via a carbon atom or carbon and oxygen atoms, and
(G) a carboxylic anhydride.

Other aspects are methods of preparing the adhesive compositions, and methods of using them as adhesives or as adherent sealants or coatings in relation to substrates, with cure of the composition.

### BENEFITS

We find that these adhesive compositions cure into fluoroelastomer having excellent gasoline resistance, solvent resistance, oil resistance, chemical resistance, heat resistance, low-temperature properties, low moisture permeability, and excellent electrical characteristics. The compositions form a cured product that achieves a firm adhesion to a broad range of substrates including metals and plastics, by brief heating at relatively low temperatures. In particular, we find them firmly adherent to Mg alloys, Al, and Al alloys, and thus advantageously used as the formed in-place gasket (FIPG) material for intake manifolds in automobile engines.

### FURTHER EXPLANATIONS; OPTIONS AND PREFERENCES

In the formulas throughout the specification, "Me" stands for methyl and "Ph" stands for phenyl.

### Component A

Component (A) is a linear polyfluoro compound containing at least two alkenyl groups per molecule and having a perfluoropolyether structure in the backbone. The preferred linear polyfluoro compound has the general formula (1).

CH₂=CH-(X)ₐ-Rf¹-(X')ₐ-CH=CH₂ (1)

In formula (1), X is -CH₂-, -CH₂O-, -CH₂OCH₂-or -Y-NR-CO-, wherein Y is -CH₂- or an o-, m- or p-dimethylsilylphenylene group of structural formula (Z): 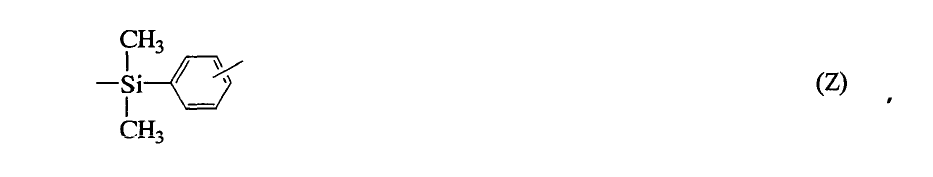 and R is hydrogen or a substituted or unsubstituted monovalent hydrocarbon group. X' is -CH₂-, -OCH₂-, -CH₂OCH₂-or -CO-NR-Y'-, wherein Y' is -CH₂- or an o-, m- or p-dimethylsilylphenylene group of structural formula (Z'): 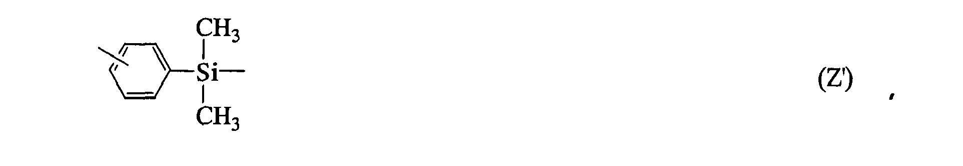 and R is as defined above. Rf¹ is a divalent perfluoropolyether group. The subscript "a" is each independently 0 or 1.

R is a hydrogen atom or a monovalent hydrocarbon group having preferably 1 to 12 carbon atoms, and more preferably 1 to 10 carbon atoms. Specific examples of hydrocarbon groups include alkyl groups such as methyl, ethyl, propyl, butyl, hexyl, cyclohexyl and octyl; aryl groups such as phenyl and tolyl; aralkyl groups such as benzyl and phenylethyl; and substituted monovalent hydrocarbon groups in which some or all of the hydrogen atoms are substituted by halogen atoms such as fluorine.

Preferably, Rf¹ is a divalent perfluoropolyether group having the general formula (i) or (ii).

-CₜF₂ₜ-[OCF₂CF(CF₃)]ₚ-O-CF₂(CF₂)ᵣCF₂-O-[CF(CF₃)CF₂O]_{q}-CₜF₂ₜ- (i)

In formula (i), p and q are integers of 1 to 150, the sum of p and q is 2 to 200 on average, r is an integer of 0 to 6, and t is 2 or 3.

-CₜF₂ₜ-[OCF₂CF(CF₃)]ᵤ-(OCF₂)ᵥ-OCₜF₂ₜ- (ii)

In formula (ii), u is an integer of 1 to 200, v is an integer of 1 to 50, and t is as defined above.

Preferred examples of Rf¹ group include those of the following formulas (a) to (c): 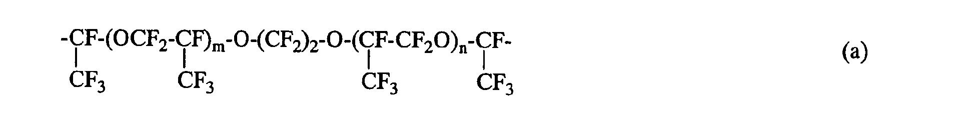 wherein m and n are each an integer of at least 1, and the average of the sum m+n is from 2 to 200; 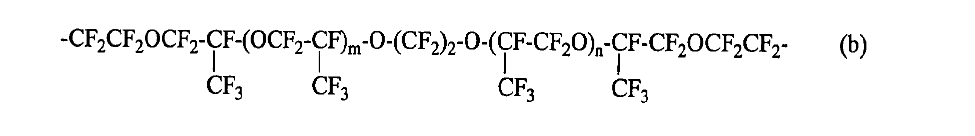 wherein m and n are each an integer of at least 1, and the average of the sum m+n is from 2 to 200; and 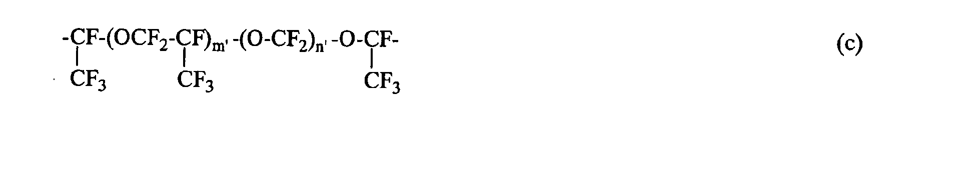 wherein m' is an integer of 1 to 200, and n' is an integer of 1 to 50. Of these, the divalent groups with the structure of formula (a) are most preferred.

Preferred examples of component (A) include compounds of the general formula (1a). 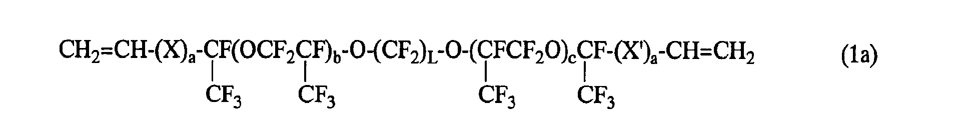 Herein X is -CH₂-, -CH₂O-, -CH₂OCH₂- or -Y-NR-CO-, wherein Y is -CH₂- or an o-, m- or p-dimethylsilylphenylene group of structural formula (Z): 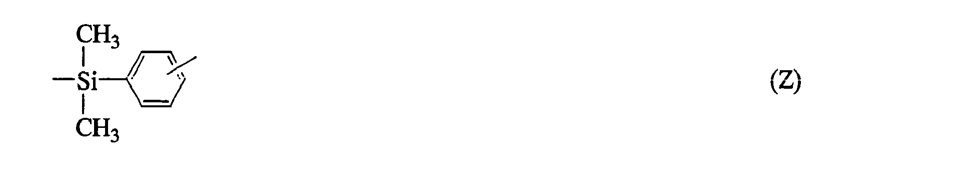 and R is hydrogen, methyl, phenyl or allyl. X' is -CH₂-, -OCH₂-, -CH₂OCH₂- or -CO-NR-Y'-, wherein Y' is -CH₂- or an o-, m- or p-dimethylsilylphenylene group of structural formula (Z'): 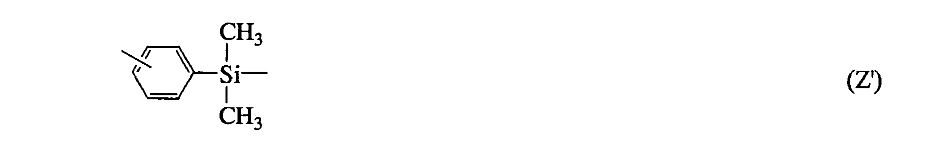 and R is as defined above. The subscript a is independently 0 or 1, L is an integer from 2 to 6, and b and c are each integers from 0 to 200. The sum b+c is preferably from 30 to 200, more preferably from 30 to 150.

Illustrative examples of linear polyfluoro compounds of formula (1) include the compounds having the following formulas. 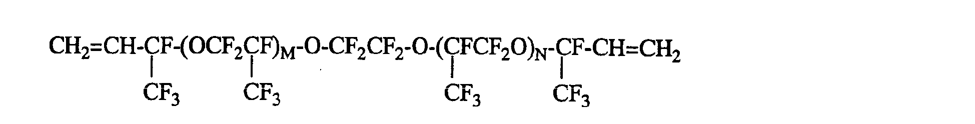 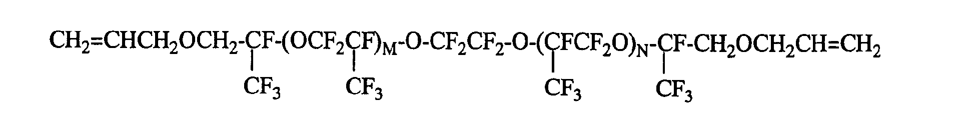 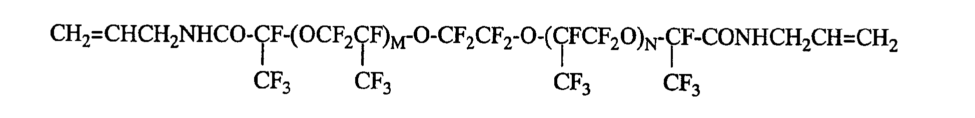 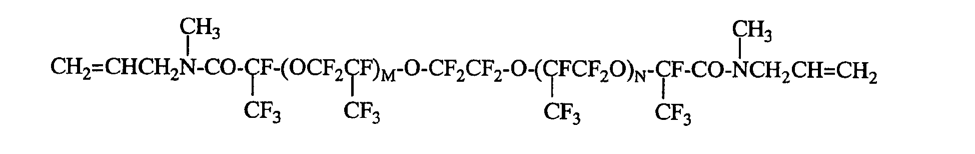 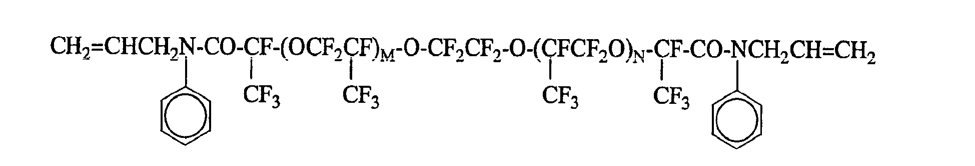 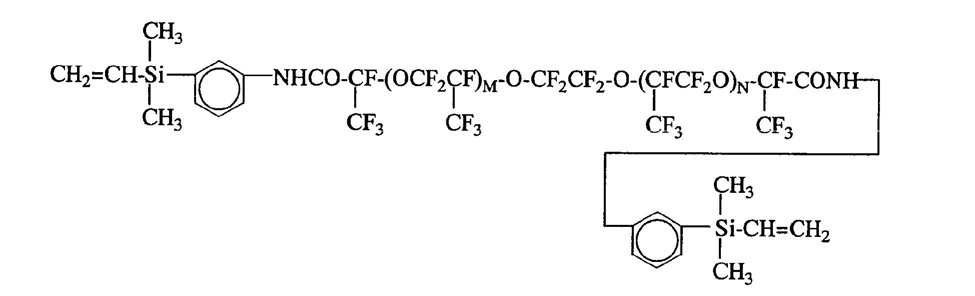 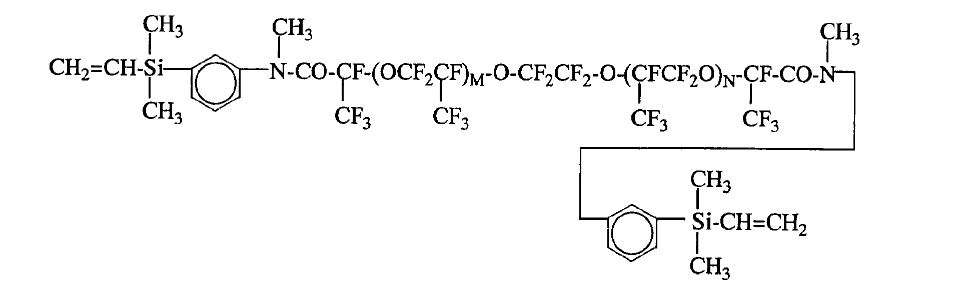 In the above formulas, M and N are each integers from 0 to 200, and the sum M+N is from 6 to 200.

For the composition to have suitable physical properties when used for such purposes as sealing, potting, coating and impregnation, and also in the cured form, it is desirable that the linear polyfluoro compound of formula (1) have a viscosity at 23°C in a range of 100 to 100,000 mPa·s, preferably 500 to 50,000 mPa·s, and even more preferably 1,000 to 20,000 mPa·s, as measured according to JIS K-7117. The most suitable viscosity for the intended application can be selected from within this viscosity range.

These linear polyfluoro compounds may be used singly or as a combination of two or more thereof.

### Component B

Component (B) is a fluorine-bearing organohydrogensiloxane having at least two silicon-bonded hydrogen atoms (sometimes referred to below as hydrosilyl groups, or SiH groups) per molecule. In the inventive composition, component (B) functions as a crosslinking agent or chain extender for component (A). For good compatibility with and dispersibility in component (A) and uniformity after curing, it is preferable for component (B) to have on the molecule at least one fluorine-bearing group selected from among monovalent perfluoroalkyl groups, monovalent perfluorooxyalkyl groups, divalent perfluoroalkylene groups and divalent perfluorooxyalkylene groups.

Illustrative examples of such fluorine-bearing groups include those of the following general formulas:

C_{g}F_{2g+1}-

(wherein g is an integer from 1 to 20, and preferably from 2 to 10),

-C_{g}F_{2g}-

(wherein g is an integer from 1 to 20, and preferably from 2 to 10),

F-[CF(CF₃)CF₂O]_{f}-CₕF₂ₕ-

(wherein f is an integer from 2 to 200, and preferably from 2 to 100, and h is an integer from 1 to 3),

-CF(CF₃)-[OCF₂CF(CF₃)]ᵢ-O-CF₂CF₂-O-[CF(CF₃)CF₂O]ⱼ-CF(CF₃)-

(wherein i and j are each an integer of at least 1, the average of the sum i+j is from 2 to 200, and preferably from 2 to 100), and

-(CF₂O)ᵣ-(CF₂CF₂O)ₛ-CF₂-

(wherein r and s are each an integer from 1 to 50).

Divalent linkages for connecting the above perfluoroalkyl, perfluorooxyalkyl, perfluoroalkylene or perfluorooxyalkylene groups with silicon atoms include alkylene and arylene groups and combinations thereof, which may be separated by an ether-bonding oxygen atom, amide linkage, carbonyl linkage, or combinations thereof. Specific examples include linkages having 2 to 12 carbon atoms, such as -CH₂CH₂-, -CH₂CH₂CH₂-, -CH₂CH₂CH₂OCH₂-, -CH₂CH₂CH₂-NH-CO-, -CH₂CH₂CH₂-N(Ph)-CO-, -CH₃CH₂CH₂-N(CH₃)-CO-, and -CH₂CH₂CH₂-O-CO-.

Illustrative examples of component (B) having such fluorine-bearing groups include the following compounds. These compounds may be used singly or as combinations of two or more thereof.

Typically component (B) differs from component (F), described below. [It differs in any event from (F) where (F) has only one Si-H. Typically (B) lacks the epoxy/trialkoxysilyl that characterises (F).]

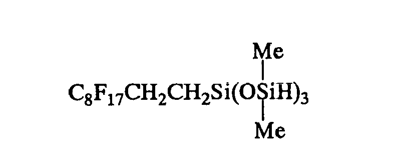

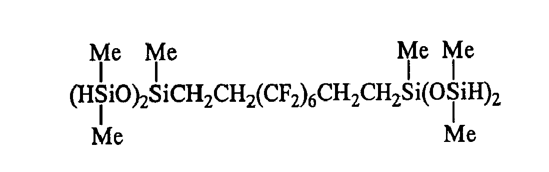

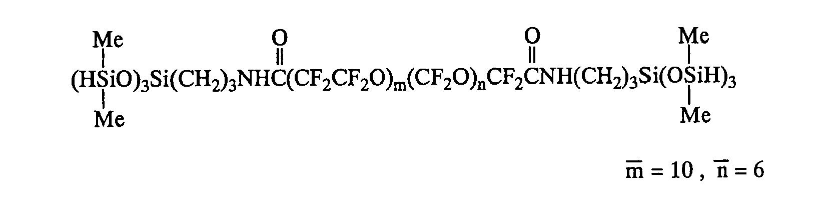

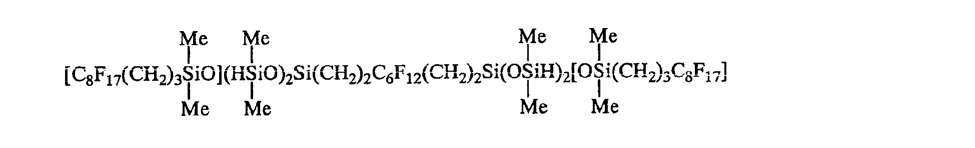

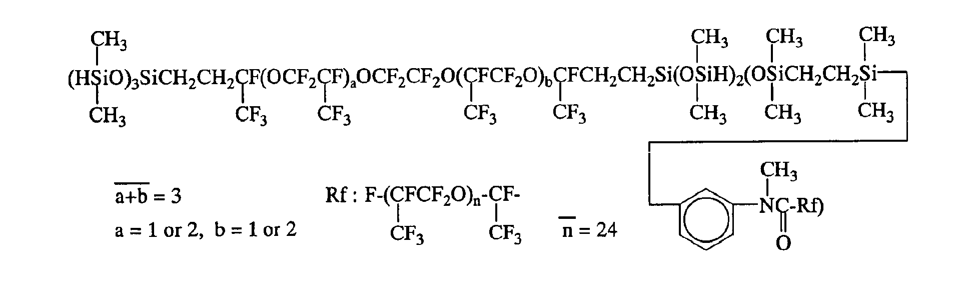

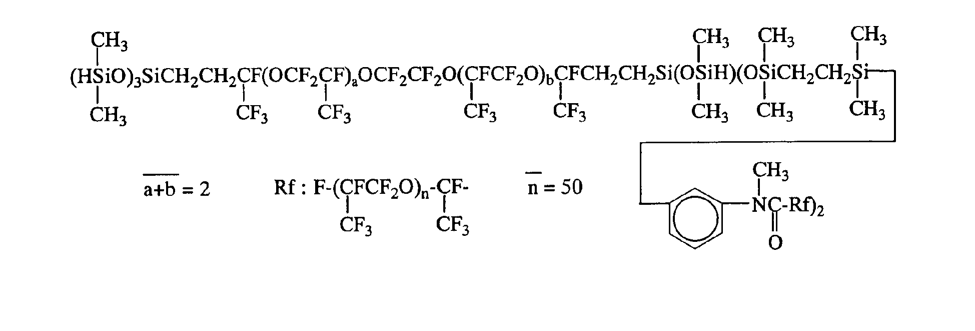

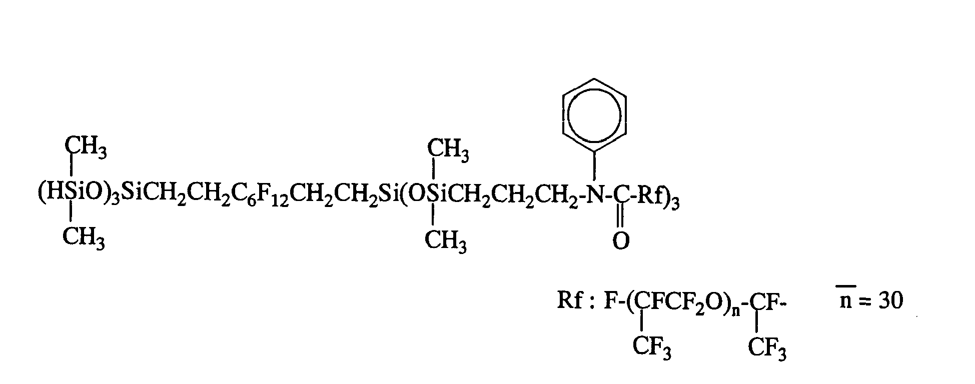

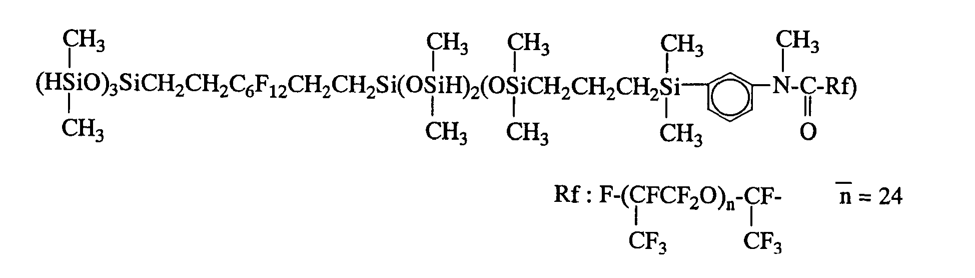

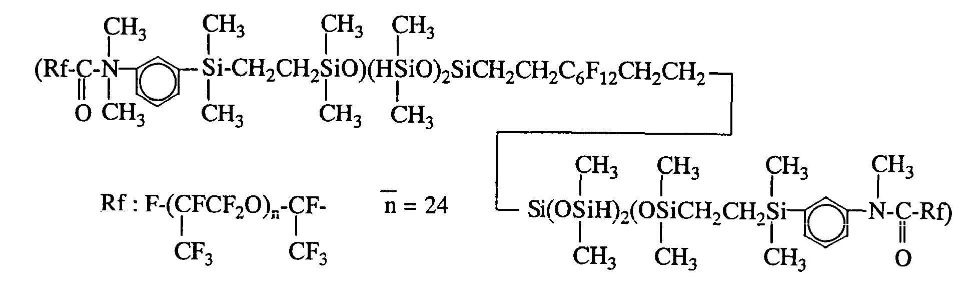

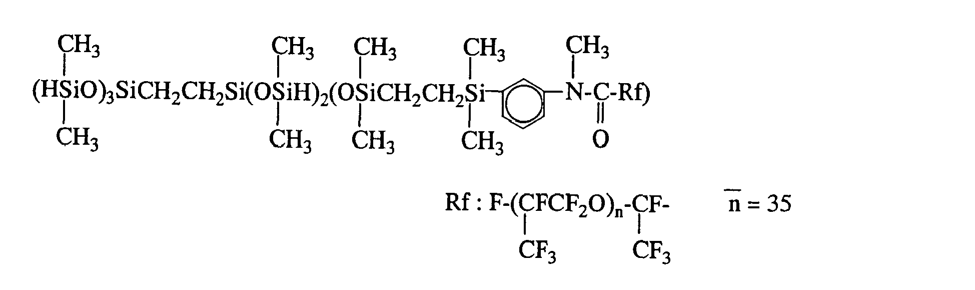

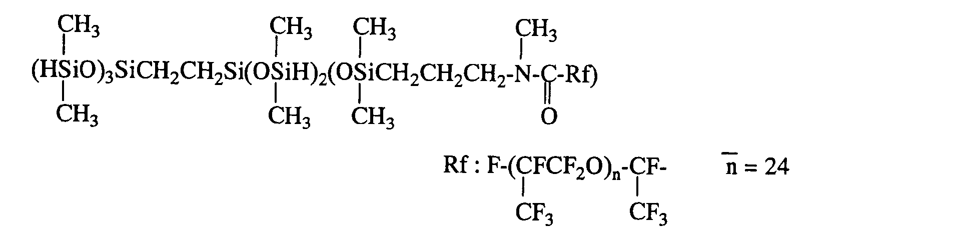

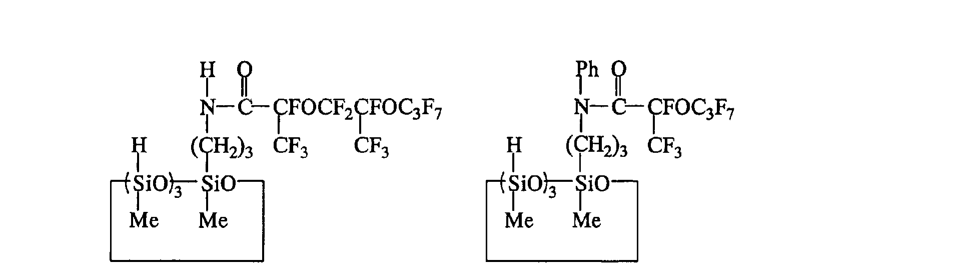

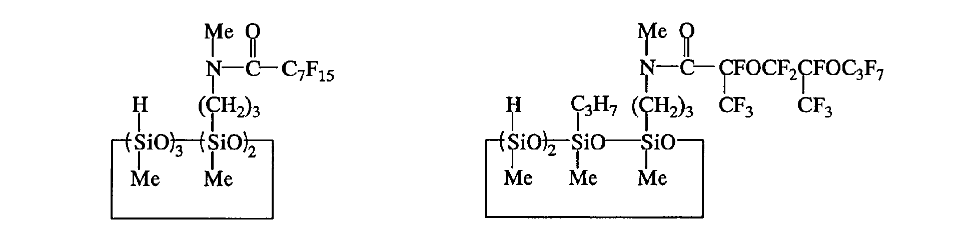

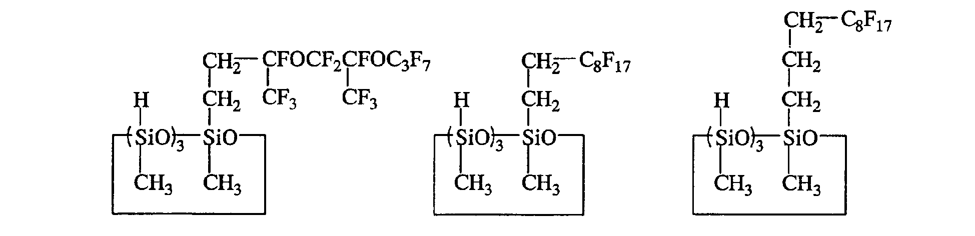

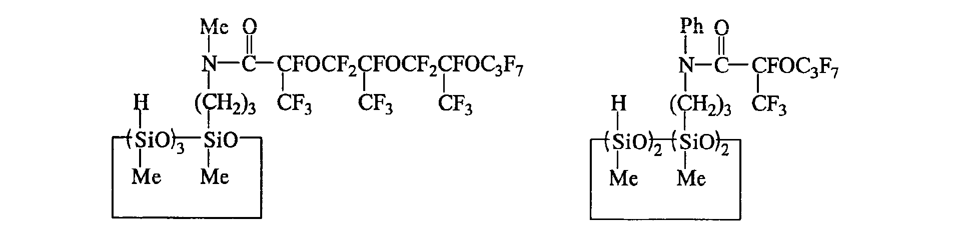

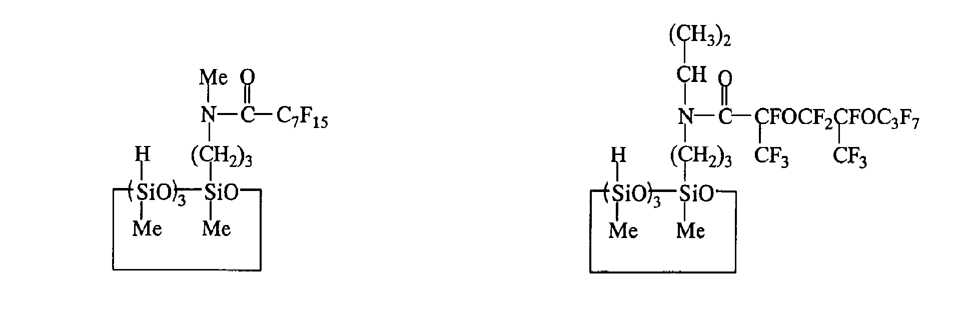

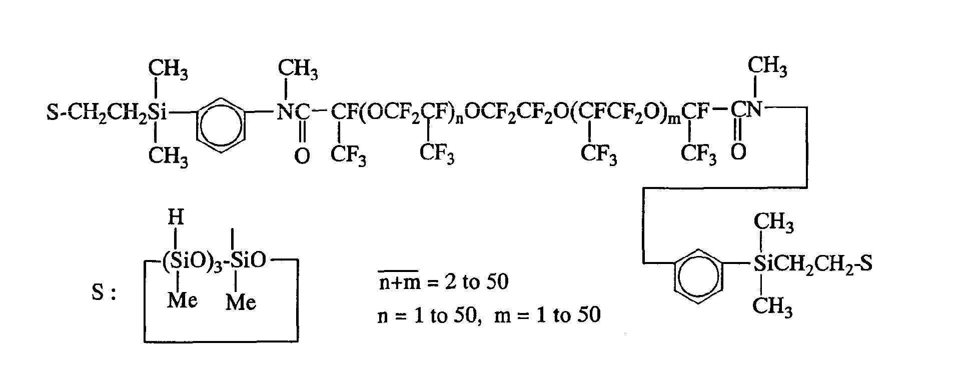

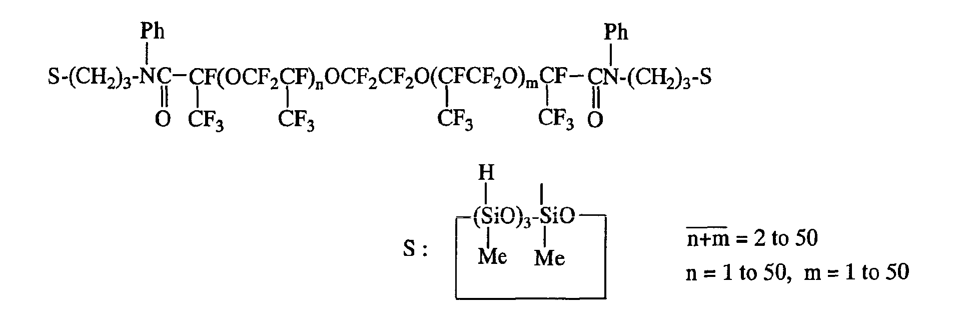

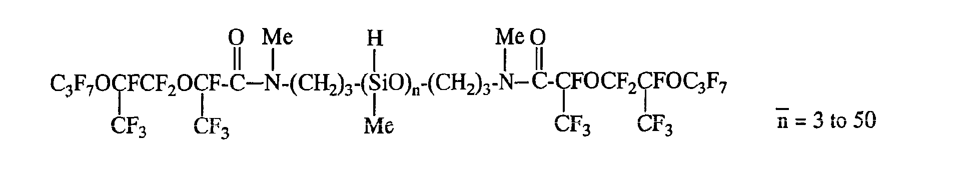

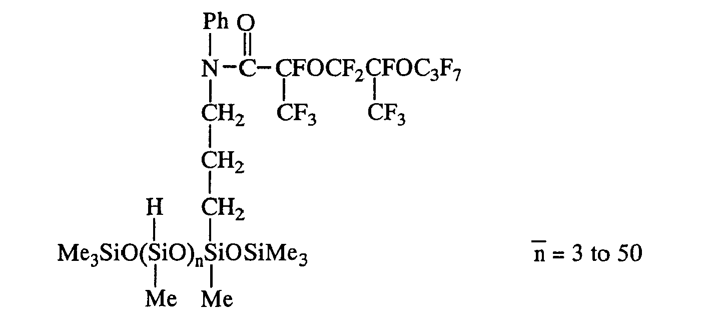

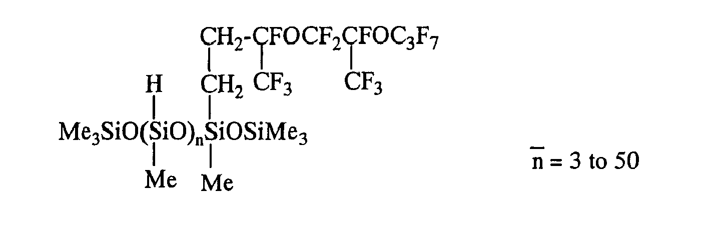

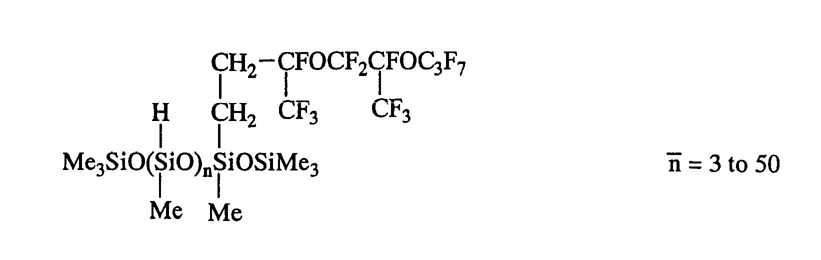

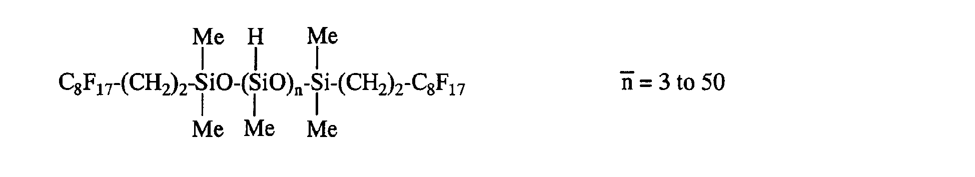

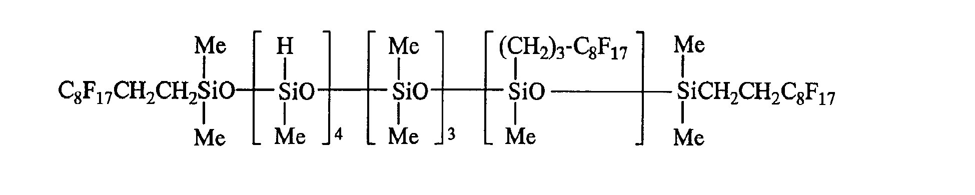

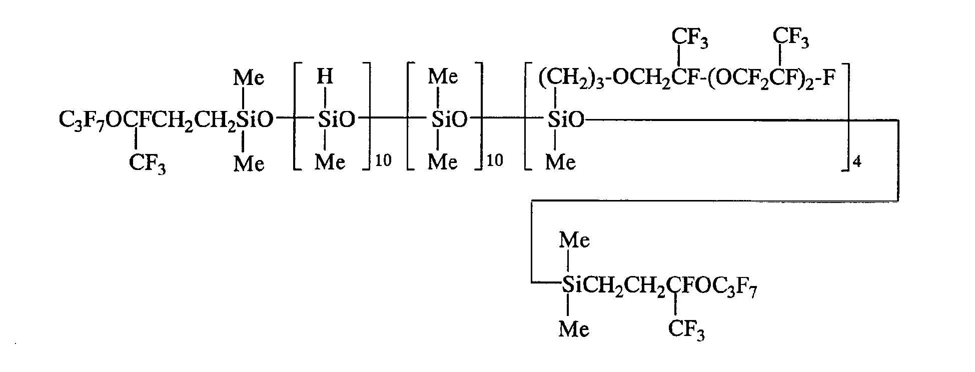

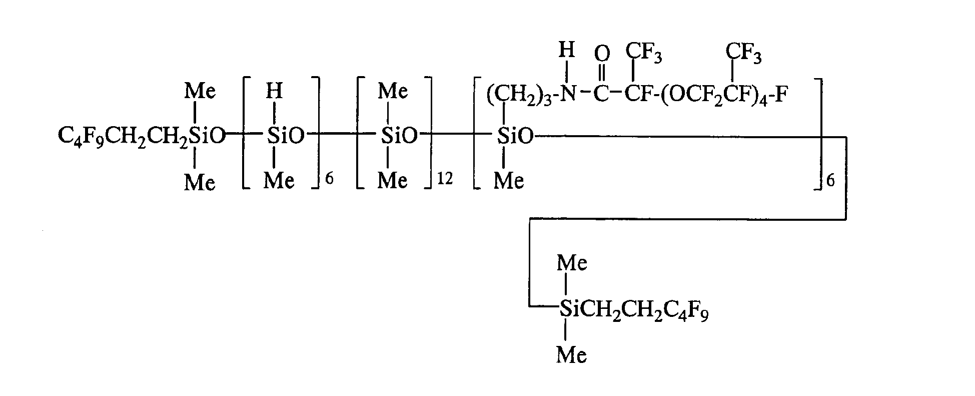

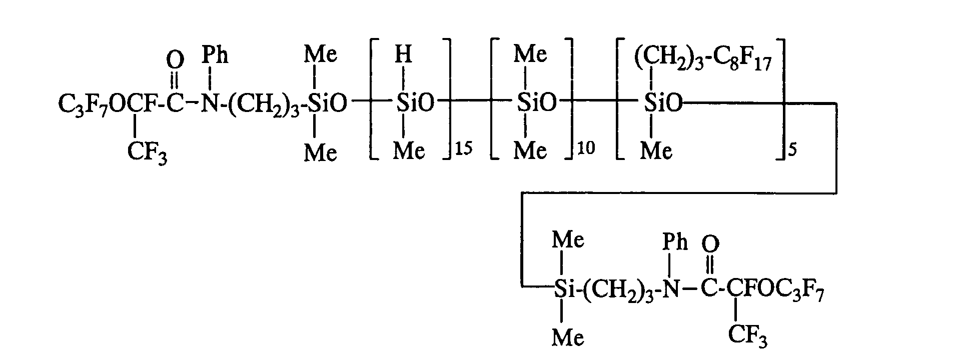

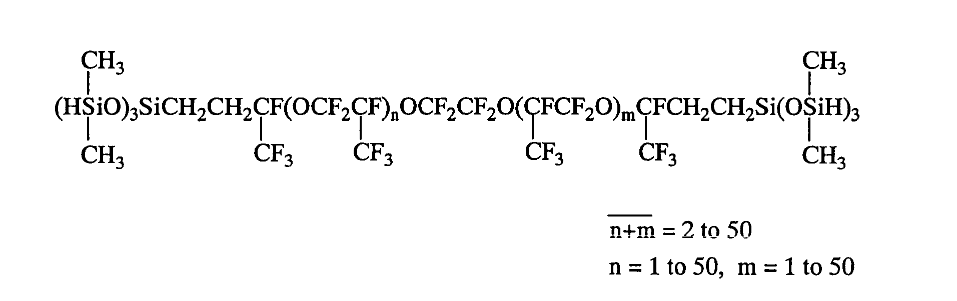

Component (B) is included in an amount effective for curing component (A), and preferably an amount corresponding to 0.5 to 3.0 moles, and preferably 0.8 to 2.0 moles, of hydrosilyl (SiH) groups on component (B) per mole of total alkenyl groups (e.g., vinyl, allyl, cycloalkenyl groups) on component (A). If there are too few hydrosilyl groups, a sufficient degree of crosslinking may not occur, resulting in an under-cured product. On the other hand, too many hydrosilyl groups can induce foaming during the curing process.

### Component C

Component (C) is a platinum group compound as a reaction catalyst for hydrosilylation. The hydrosilylation catalyst promotes addition reaction between alkenyl groups in component (A) and hydrosilyl groups in component (B). Such catalysts are generally noble metal compounds which are expensive. Of these, use is often made of platinum and platinum group compounds which are more readily available.

Exemplary platinum group compounds include chloroplatinic acid and complexes of chloroplatinic acid with olefins (e.g., ethylene), alcohols or vinyl siloxanes, and metallic platinum on supports such as silica, alumina and carbon. Known platinum group metal catalysts other than platinum compounds include rhodium, ruthenium, iridium and palladium compounds, specific examples of which are RhCl(PPh₃)₃, RhCl(CO)(PPh₃)₂, Ru₃(CO)₁₂, IrCl(CO)(PPh₃)₂ and Pd(PPh₃)₄.

If these catalysts are solid catalysts, they may be used in a solid state. However, for obtaining a uniform cured product, it is preferable to dissolve chloroplatinic acid or a complex thereof in a suitable solvent, and intimately mix the resulting solution with the linear polyfluoro compound (A).

Component (C) may be used in a catalytic amount, for example, in an amount of 0.1 to 500 ppm of platinum group metal based on the total weight of components (A) and (B).

### Component D

Component (D) is a hydrophobic silica powder which imparts a suitable physical strength to the cured product obtained from the inventive composition. It also helps uniformly disperse the isocyanurate compound (component E), organosiloxane (component F) and carboxylic anhydride (component G), to be described later, within the composition. The hydrophobic silica powder (D) is a hydrophobized form of finely divided silica with a BET specific surface area of at least 50 m²/g, and preferably from 50 to 400 m²/g, that is familiar as a silicone rubber filler.

At a BET specific surface area of less than 50 m²/g, the resulting cured product may have an insufficient physical strength, and components (E), (F) and (G) may not be uniformly dispersed. On the other hand, at more than 400 m²/g, it may become difficult to disperse component (D) itself uniformly, interfering with the blending step. Illustrative examples of the finely divided silica include fumed silica, precipitated silica and colloidal silica. Of these, fumed silica is especially preferred.

The finely divided silica is treated with a hydrophobizing agent, examples of which include organochlorosilanes, organodisilazanes, cyclic organopolysilazanes, and linear organopolysiloxanes. Of these, organochlorosilanes are preferred.

Component (D) is preferably included in an amount of 2 to 30 parts by weight, and more preferably 4 to 25 parts by weight, per 100 parts by weight of component (A). At less than 2 parts by weight, the dispersion state of component (G) may change with time, and the resulting cured product has diminished physical properties and an unstable adhesion. On the other hand, at more than 30 parts by weight, the composition has a poor flow and the resulting cured product has a lower physical strength.

### Component E

Component (E) is an isocyanurate which is included in the inventive composition to impart self-adhesiveness and a suitable curability thereto, and to confer the cured product obtained from the composition with a good adhesion and good surface properties. The isocyanurate bears at least one group per molecule selected from among epoxy groups and trialkoxysilyl groups which is bonded through an intervening carbon atom to a nitrogen atom. Preferably the isocyanurate has the general formula (2): 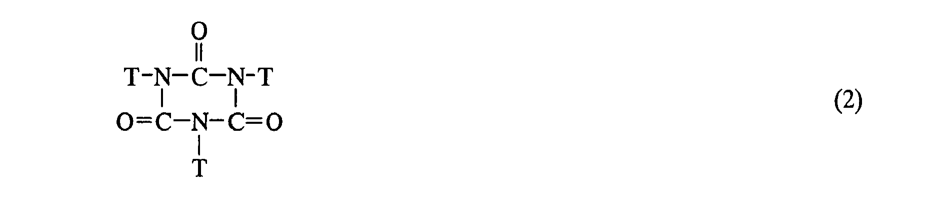 wherein T is each independently a lower alkyl group, an aryl group, an aralkyl group, a monofunctional lower alkenyl group, an organic group of the formula: (R¹O)₃Si-R²- wherein R¹ is a lower alkyl group and R² is a lower alkylene group, or an organic group of the formula: Q-R³- wherein Q is an epoxy group and R³ is a lower alkylene group, with the proviso that at least one T is a (R¹O)₃Si-R²- or Q-R³- group.

Exemplary lower alkyl groups include linear or branched C₁-C₈ alkyl groups such as methyl, ethyl, propyl, isopropyl, butyl, isobutyl, pentyl, hexyl, and octyl. Exemplary aryl and aralkyl groups include C₆-C₁₂ groups such as phenyl, tolyl, xylyl and benzyl. Exemplary monofunctional lower alkenyl groups include linear or branched C₂-C₅ alkenyl groups which have one carbon-carbon double bond, such as vinyl, allyl, isopropenyl, butenyl and pentenyl, with allyl being preferred.

In organic groups of the formula: (R¹O)₃Si-R²-, R¹ is a lower alkyl group as exemplified above. Preferred examples include methyl and ethyl; methyl is especially preferred. R² is typically up to C₅, e.g. a C₂-C₅ alkylene group, examples of which include ethylene, propylene, butylene and pentylene groups, with propylene being preferred. Exemplary organic groups of the formula: (R¹O)₃Si-R²- include trimethoxysilylethyl, trimethoxysilylpropyl, triethoxysilylethyl and triethoxysilylpropyl. Trimethoxysilylpropyl and triethoxysilylpropyl are preferred.

In organic groups of the formula: Q-R³-, R³ is typically a C₁-C₃ alkylene group such as methylene, ethylene or propylene. Exemplary organic groups include 2,3-epoxypropyl, 3,4-epoxybutyl and 4,5-epoxypentyl. Of these, 2,3-epoxypropyl is preferred.

Most isocyanurate compounds of formula (2) can be prepared by cyclizing an organic isocyanate of the general formula (3):

T-NCO (3)

wherein T is as defined above in the presence of a basic catalyst such as a phosphine, alkali metal alkoxide or tin salt. Those isocyanurates bearing a group of the formula: Q-R³- can be prepared only by using a peracid such as performic acid or peracetic acid to oxidize the carbon-carbon double bond on an aliphatic unsaturated isocyanurate of the general formula (4): 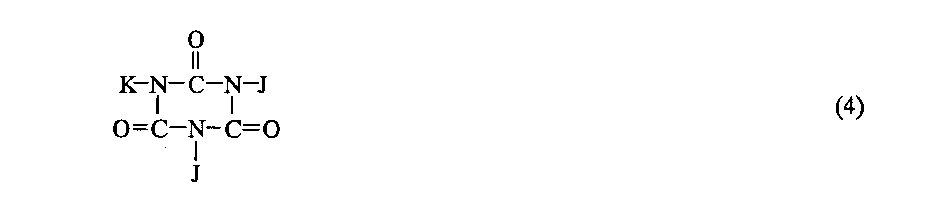 wherein K is a monofunctional lower alkenyl group as mentioned above, and L is the same group as the K group or is a group other than the K group selected from among the groups mentioned above for T.

Those isocyanurates having a group of the formula: (R¹O)₃Si-R²- can also be obtained by reacting an organosilicon hydride of the general formula (5) :

(R¹O)₃Si-R²-H (5)

wherein R¹ and R² are as defined above with an aliphatic unsaturated isocyanurate of above general formula (4) in the presence of a platinum catalyst.

In preparing the isocyanurate for use in the invention, the target substance may be isolated following reaction completion. It is also possible to use the reaction mixture e.g. from which only unreacted feedstock, by-products and catalyst have been removed.

Illustrative examples of isocyanurates which can be used as component (E) include those having the following structural formulas. These compounds may be used singly or as combinations of two or more thereof.

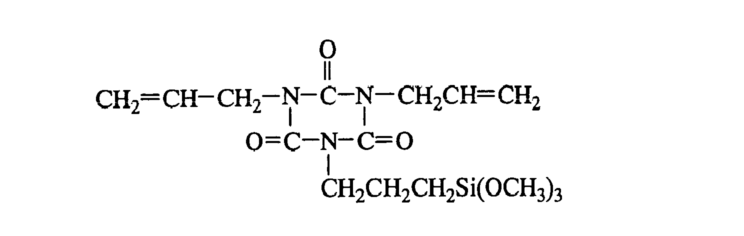

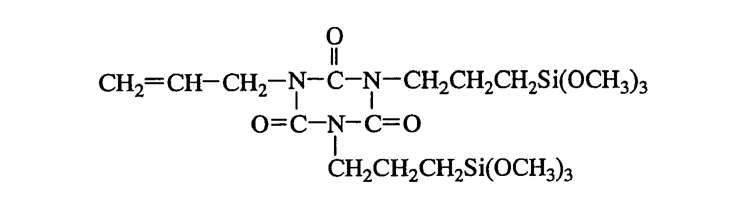

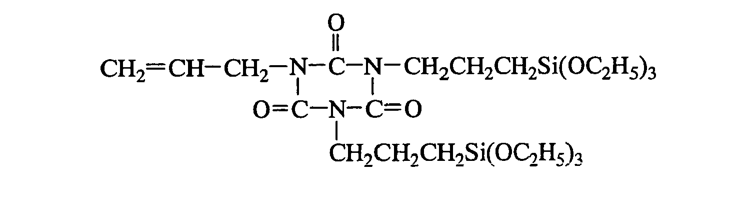

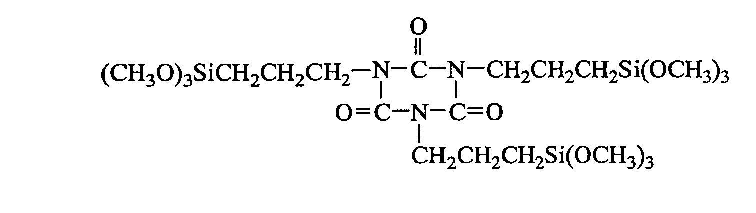

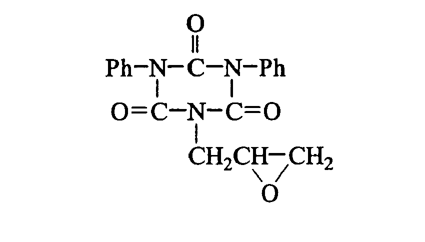

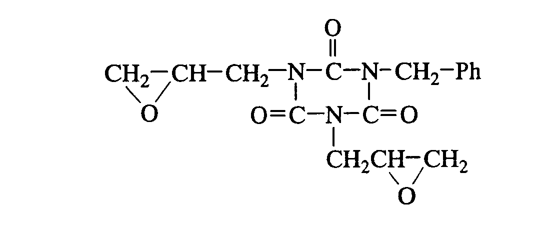

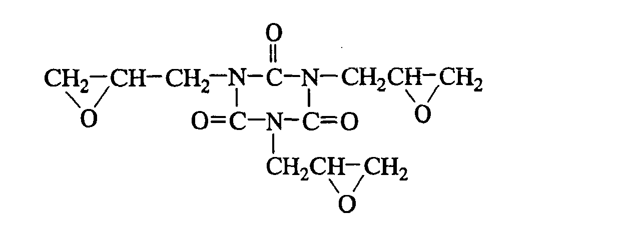

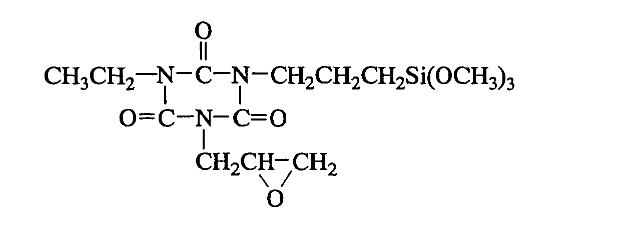

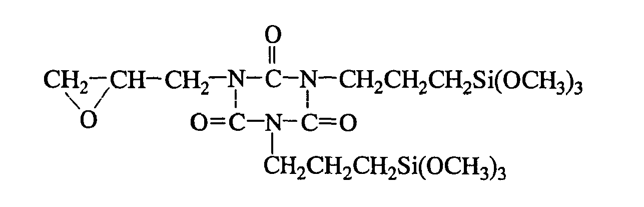

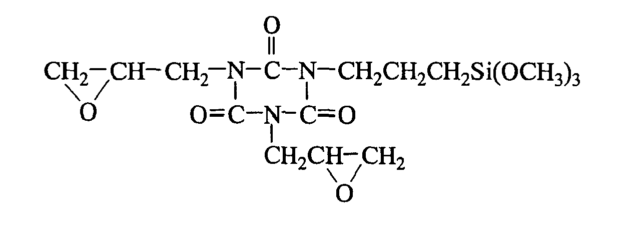

Component (E) is preferably included in an amount of 0.01 to 1.0 part by weight, and more preferably 0.05 to 0.5 part by weight, per 100 parts by weight of components (A) and (B) combined. At less than 0.01 part by weight, the composition may have a poor bond strength and the cured product obtained therefrom have poor surface properties. More than 1.0 part by weight hinders the curability, resulting in a cured product with diminished physical properties.

### Component F

Component (F) is an organosiloxane which is included to confer the inventive composition with sufficient self-adhesiveness. Thus the organosiloxane (F) is sometimes referred to as "tackifier." The organosiloxane bears on the molecule at least one silicon-bonded hydrogen atom and at least one group selected from among epoxy groups and trialkoxysilyl groups which is bonded to a silicon atom through an intervening carbon atom or atoms or through intervening carbon and oxygen atoms. Preferred are those organosiloxanes which further have at least one monovalent perfluoroalkyl group or monovalent perfluorooxyalkyl group bonded to a silicon atom through an intervening carbon atom or atoms or through intervening carbon and oxygen atoms.

The organosiloxane (F) has a siloxane backbone which may be either cyclic, linear or branched, or a combination of any of these. Organosiloxanes that can be used herein include those having the following general formulas. 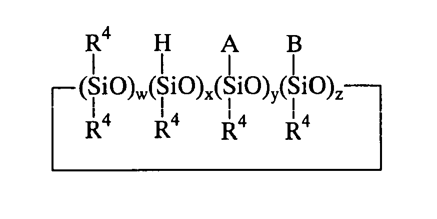 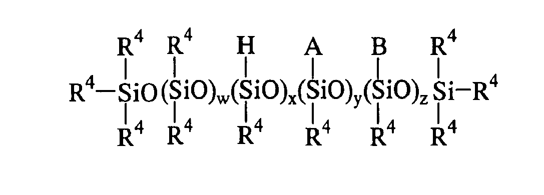 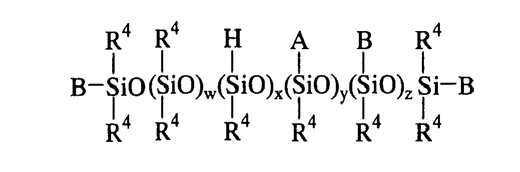 In these formulas, R⁴ is a halogen-substituted or unsubstituted monovalent hydrocarbon group, A and B are as described below, w is a number from 0 to 100, x is a number from 1 to 100, y is a number from 1 to 100, and z is a number from 0 to 100.

R⁴ is preferably a halogen-substituted and unsubstituted monovalent hydrocarbon group of 1 to 10 carbons, and more preferably 1 to 8 carbons. Specific examples include alkyl groups such as methyl, ethyl, propyl, butyl, hexyl, cyclohexyl and octyl; aryl groups such as phenyl and tolyl; aralkyl groups such as benzyl and phenylethyl; and substituted forms of the foregoing monovalent hydrocarbon groups in which one, some or all hydrogen atoms are substituted by fluorine or other halogen atoms. Of these, methyl is especially preferred.

It is preferred that w be from 0 to 20, x be from 1 to 20, y be from 1 to 20, z be from 1 to 20, and w+x+y+z be from 3 to 50.

The letter "A" in the above formulas represents an epoxy group and/or trialkoxysilyl group which is bonded to a silicon atom through an intervening carbon atom(s) or through intervening carbon and oxygen atoms. Specific examples include the following groups. 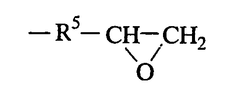 Herein, R⁵ is a divalent hydrocarbon group with 1 to 10 carbon atoms, and preferably 1 to 5 carbon atoms, such as an alkylene or cycloalkylene group, which may be separated by an oxygen atom.

-R⁶-Si(OR⁷)₃

Herein, R⁶ is a divalent hydrocarbon group of 1 to 10 carbon atoms, preferably 1 to 4 carbon atoms, such as an alkylene group; and R⁷ is a monovalent hydrocarbon group of 1 to 8 carbon atoms, and preferably 1 to 4 carbon atoms, such as an alkyl group. 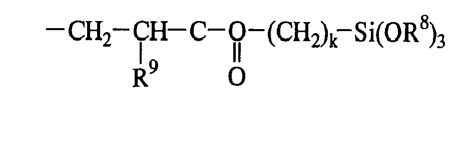 Herein, R⁸ is a monovalent hydrocarbon group of 1 to 8 carbon atoms, and preferably 1 to 4 carbon atoms, such as an alkyl group; R⁹ is a hydrogen atom or a methyl group, and k is an integer from 2 to 10.

The letter "B" in the above formulas represents a monovalent perfluoroalkyl group or perfluorooxyalkyl group which is bonded to a silicon atom through a carbon atom(s) or through carbon and oxygen atoms. Examples of the monovalent perfluoroalkyl group or perfluorooxyalkyl group include those of the general formulas:

C_{g}F_{2g+1}-

(wherein g is an integer of 1 to 20, and preferably 2 to 10) and

F-[CF(CF₃)CF₂O]_{f}-CₕF₂ₕ-

(wherein f is an integer of 2 to 200, and preferably 2 to 100, and h is an integer of 1 to 3).

These organosiloxanes can be prepared by using a conventional method to carry out a partial addition reaction on an organohydrogenpolysiloxane bearing at least three silicon-bonded hydrogen atoms (SiH groups) per molecule with a compound bearing an aliphatic unsaturated group (e.g., vinyl or allyl) and an epoxy group and/or trialkoxysilyl group and optionally, a compound having an aliphatic unsaturated group and a perfluoroalkyl or perfluorooxyalkyl group. The number of aliphatic unsaturated groups must be smaller than the number of SiH groups.

In preparing the organosiloxane for use in the invention, the target substance may be isolated following reaction completion. It is also possible to use the reaction mixture e.g. from which only unreacted feedstock and the addition reaction catalyst have been removed.

Specific examples of organosiloxanes which may be used as component (F) include those having the following structural formulas. These compounds may be used singly or as combinations of two or more thereof. 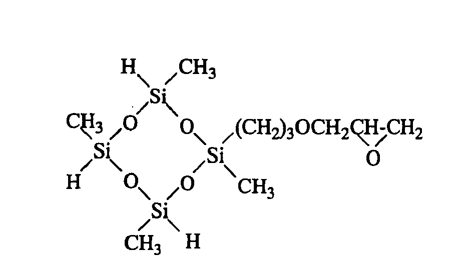 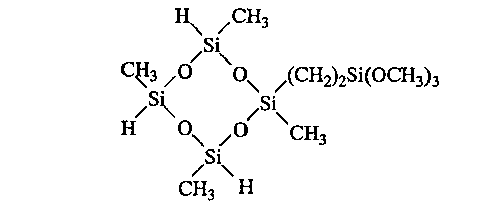 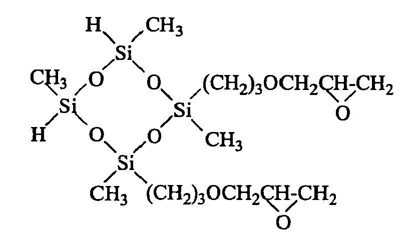 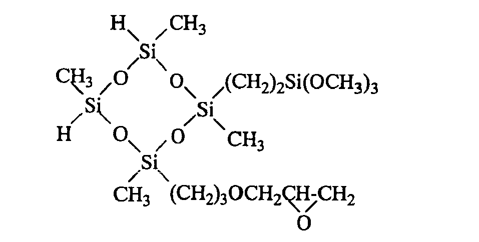 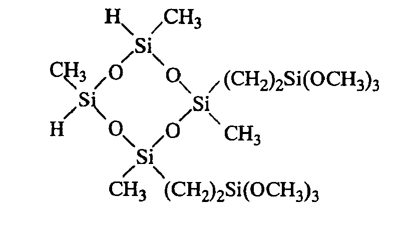 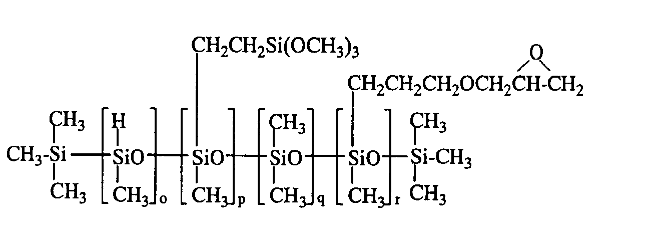 (the letters o, q and r represent positive integers, and p is 0 or a positive integer; preferably o is 1 to 8, q is 1 to 4, r is 1 to 3, and p is 1 to 3) 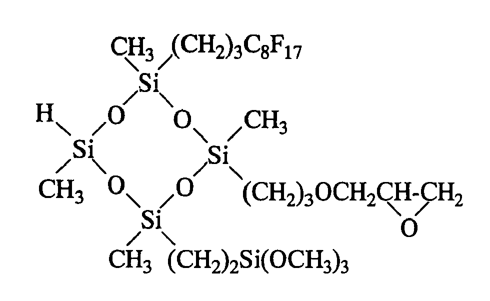 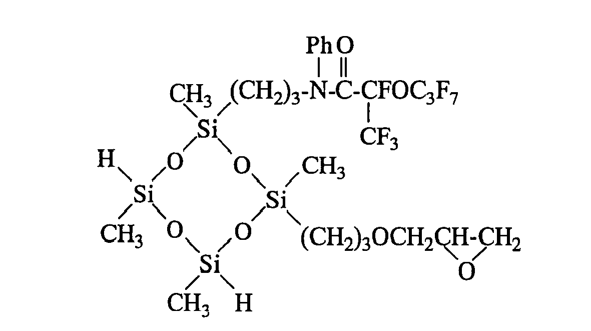 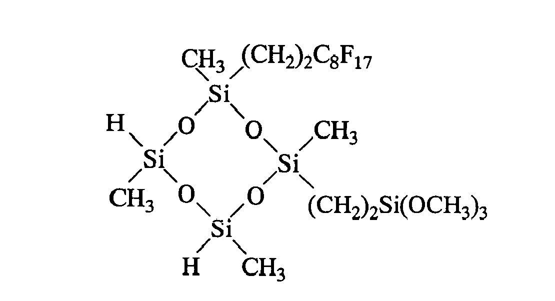 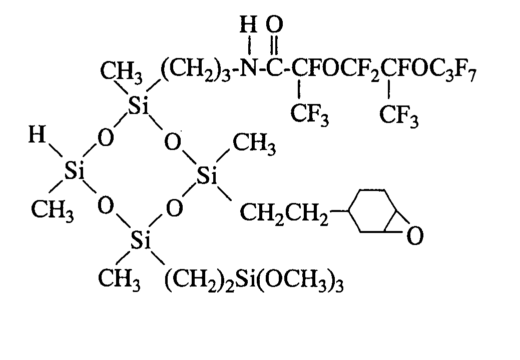 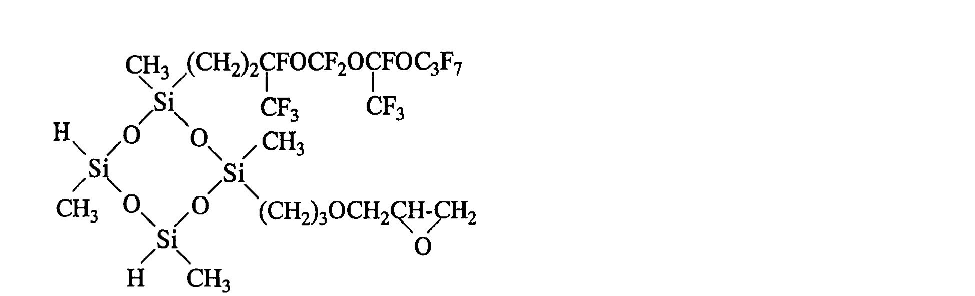 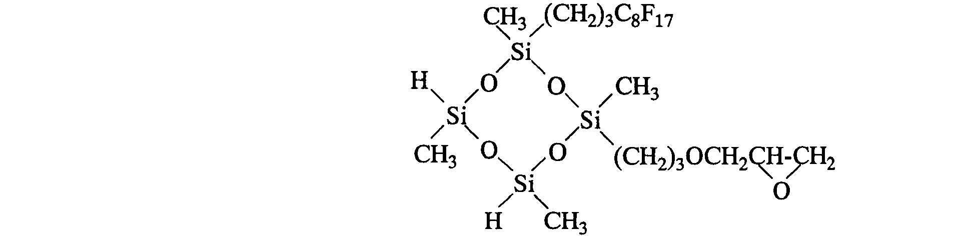 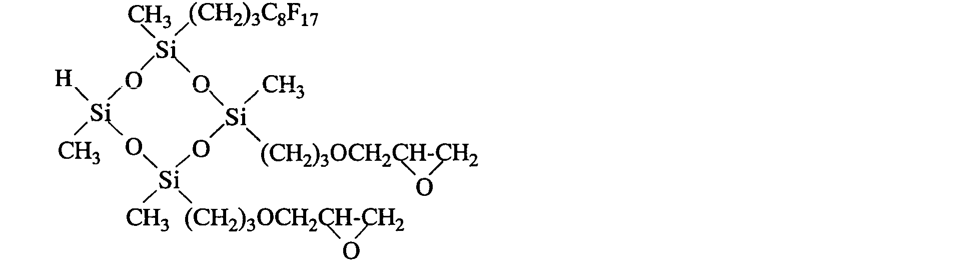 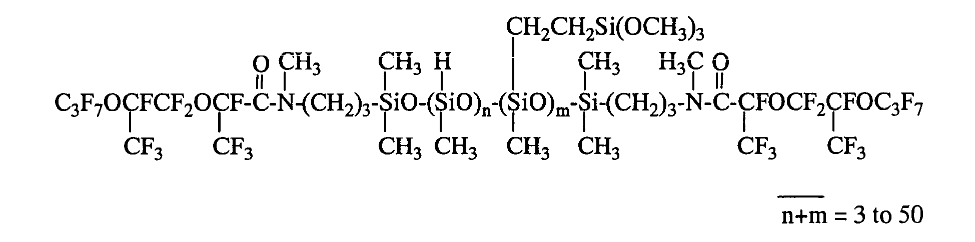 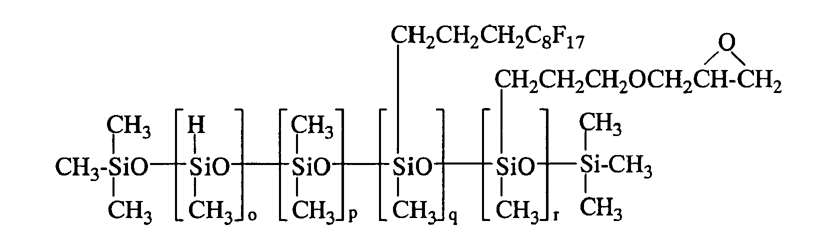 (the letters o, q and r represent positive integers, and p is 0 or a positive integer; preferably o is 1 to 8, q is 1 to 3, r is 1 to 3, and p is 1 to 4)

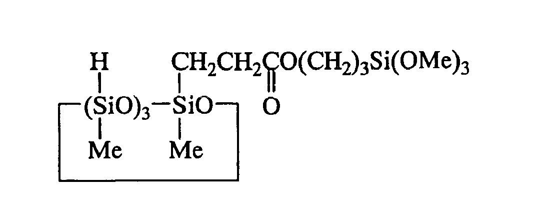

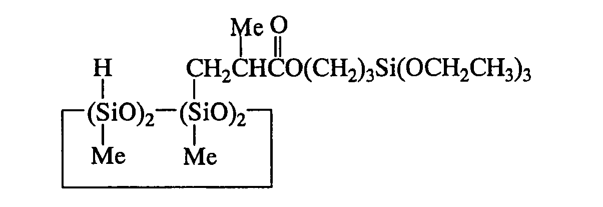

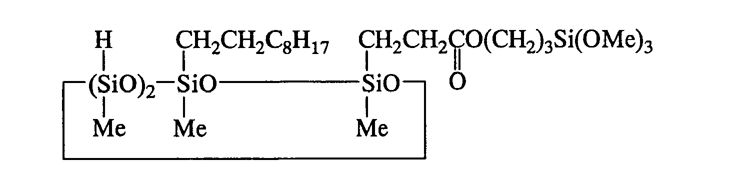

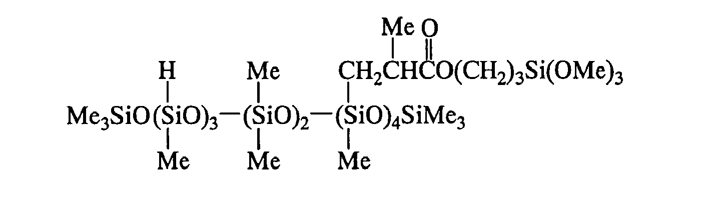

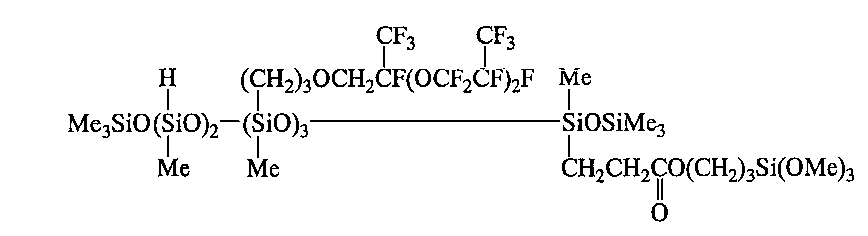

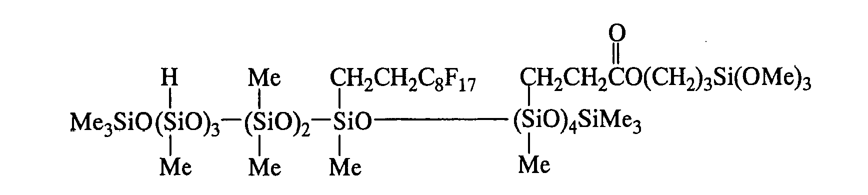

Component (F) is preferably included in an amount of 0.05 to 5 parts by weight, and more preferably 0.1 to 3 parts by weight, per 100 parts by weight of component (A). At less than 0.05 part by weight, sufficient adhesion might not be achieved. On the other hand, at more than 5 parts by weight, the composition has a poor flow and less than desirable curability, and the resulting cured product has a diminished physical strength.

### Component G

Component (G) is a carboxylic anhydride, which is included in the inventive composition to improve the tackifying capability of component (F), helping the composition develop more adherence. The carboxylic anhydrides used herein encompass all those commonly used as a curing agent for epoxy resins and may be either solid or liquid at room temperature. The carboxylic anhydrides may contain a trialkoxysilyl group in which each alkoxy moiety has 1 to 6 carbon atoms, or an alkenyl group of 2 to 6 carbon atoms.

Illustrative examples of the carboxylic anhydride include those of the following structural formulas. These compounds may be used singly or as combinations of two or more thereof.

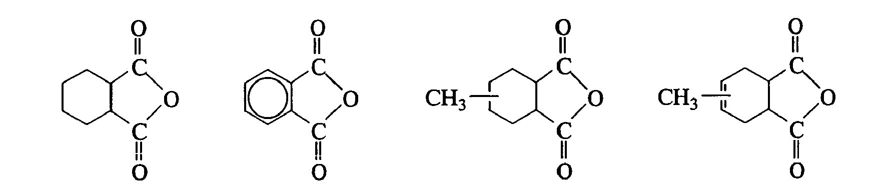

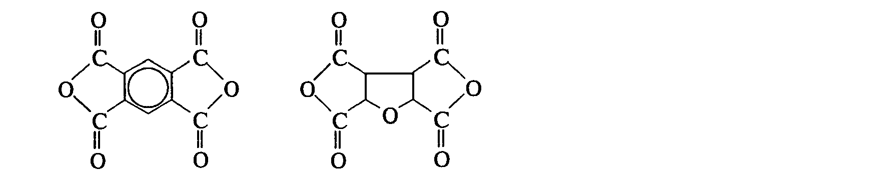

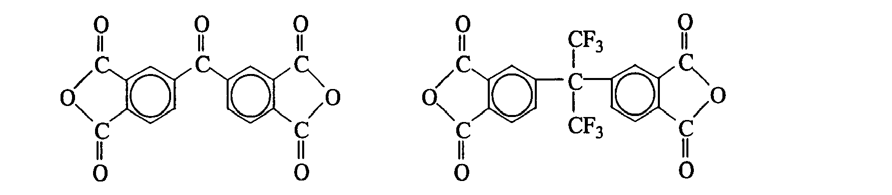

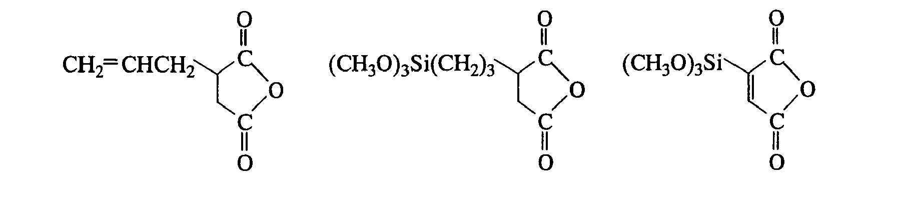

Component (G) is preferably included in an amount of 0.1 to 2 parts by weight, and more preferably 0.1 to 1 part by weight, per 100 parts by weight of component (A). Less than 0.1 part by weight is usually insufficient to achieve an adhesion enhancement effect. On the other hand, at more than 2 parts by weight, the composition may lose shelf stability, and the resulting cured product has a diminished physical strength and often changes with time.

### Other Components

In addition to above components (A) to (G), optional ingredients that may also be included in the inventive composition to increase its utility include plasticizers, viscosity modifiers, flexibilizers, hydrosilylation catalyst regulators, inorganic fillers, adhesion promoters, and silane coupling agents. These additives may be included in any respective amounts that allow the objects of the invention to be attained and that do not compromise the properties of the composition or the cured product obtained therefrom.

Polyfluoromonoalkenyl compounds of the general formula (6) below and/or linear polyfluoro compounds of the general formulas (7) and (8) below may be used as a plasticizer, viscosity modifier and/or flexibilizer.

Rf²-(X')ₐ-CH=CH₂ (6)

In formula (6), X' and a are as defined above, and Rf² has the general formula (iii):

F-[CF(CF₃)CF₂O]_{w}-CₜF₂ₜ- (iii)

wherein t is as defined above, and w is an integer which is at least 1, but smaller than the sum of p+q (average) plus r and smaller than the sum u+v for the Rf¹ group in above component (A).

D-O-(CF₂CF₂CF₂O)_{c}-D (7)

In formula (7), D is a group of the formula: CₛF₂ₛ₊₁-, wherein s is 1 to 3, and c is an integer which is from 1 to 200, but smaller than the sum of p+q (average) plus r and smaller than the sum u+v for the Rf¹ group in above component (A).

D-O-(CF₂O)_{d}(CF₂CF₂O)ₑ-D (8)

In formula (8), D is as defined above, and d and e are each integers of 1 to 200 such that the sum d+e is no larger than the sum of p+q (average) plus r or the sum u+v for the Rf¹ group in above component (A).

Examples of polyfluoromonoalkenyl compounds of formula (6) include those of the following structural formulas wherein m satisfies the condition indicated above for formula (6). 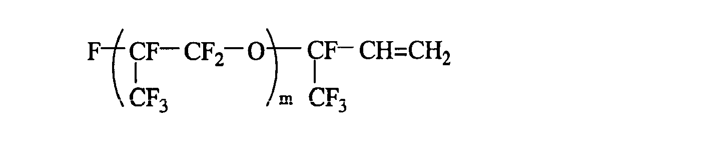 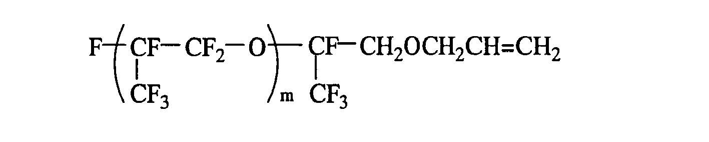 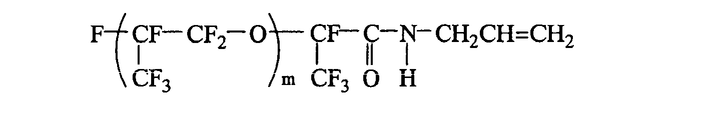 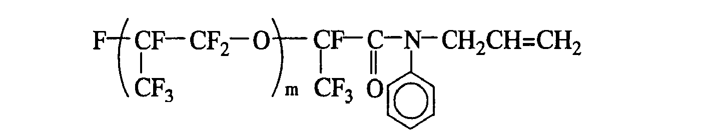 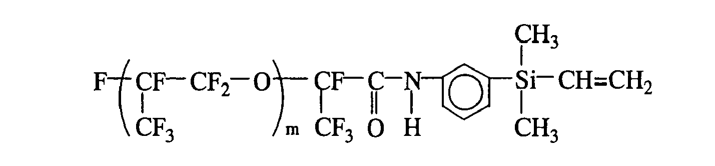 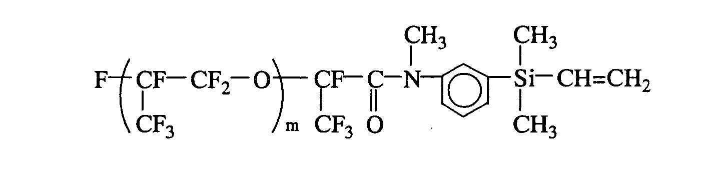 Note that m is specifically an integer of 1 to 200.

Examples of linear polyfluoro compounds of formulas (7) and (8) include those of the following structural formulas wherein n or the sum n+m satisfies the condition indicated above for these formulas.

CF₃O-(CF₂CF₂CF₂O)ₙ-CF₂CF₃

CF₃-[(OCF₂CF₂)ₙ(OCF₂)ₘ]-O-CF₃

Note that specifically m and n are each an integer from 1 to 200, and the sum m+n is from 2 to 200.

The polyfluoro compounds of formulas (6) to (8) may be included in the inventive composition in an amount of 1 to 100 parts by weight, and preferably 5 to 50 parts by weight, per 100 parts by weight of component (A), linear polyfluoro compound of formula (1). Desirably, the polyfluoro compounds of formulas (6) to (8) have a viscosity at 23°C within a range of 5 to 50,000 mPa·s.

Illustrative examples of suitable hydrosilylation catalyst regulators include acetylenic alcohols such as 1-ethynyl-1-hydroxycyclohexane, 3-methyl-1-butyn-3-ol, 3,5-dimethyl-1-hexyn-3-ol, 3-methyl-1-penten-3-ol and phenylbutynol; the reaction products of chlorosilanes having monovalent fluorine-bearing substituents with acetylenic alcohols; 3-methyl-3-penten-1-yne, 3,5-dimethyl-3-hexen-1-yne and triallyl isocyanurate; polyvinylsiloxane, and organophosphorus compounds. The addition of these compounds helps to achieve an appropriate curing reactivity and shelf stability.

Illustrative examples of inorganic fillers include reinforcing or semi-reinforcing fillers such as quartz powder, fused silica powder, diatomaceous earth and calcium carbonate; inorganic pigments such as titanium oxide, iron oxide, carbon black and cobalt aluminate; heat stabilizers such as titanium oxide, iron oxide, carbon black, cerium oxide, cerium hydroxide, zinc carbonate, magnesium carbonate and manganese carbonate; substances that confer thermal conductivity, such as alumina, boron nitride, silicon carbide and metal powders; and substances that confer electrical conductivity, such as carbon black, silver powder and conductive zinc oxide.

Adhesion promoters such as titanic acid esters and silane coupling agents such as epoxy-containing silanes may also be added to the inventive composition.

### Adhesive Composition

The adhesive composition of the invention can be prepared by uniformly mixing above components (A) to (G) and other optional ingredients using a suitable mixing apparatus, such as a planetary mixer, Ross mixer or Hobart mixer. If necessary, an apparatus such as a kneader or a three-roll mill may also be used for intimately working the mixture.

No particular limitation is imposed on the method for preparing the adhesive composition of the invention. For example, preparation may involve blending all of the components together. Alternatively, the components may be prepared as two separate compositions, which are then mixed at the time of use.

Depending on the type of catalyst (C), the resulting adhesive composition may cure at room temperature. However, heating is desirable to promote curing. In particular, to achieve good adhesion to various types of substrates, the composition is preferably cured by heating at a temperature of at least 60°C, and more preferably 100 to 200°C, for a period of from several minutes to several hours.

When using the adhesive compositions of the invention, depending on a particular application and purpose of use, it may be desirable to dissolve the composition in a suitable fluorocarbon solvent to the desired concentration before use. Suitable solvents include 1,3-bis(trifluoromethyl)benzene, Fluorinate (available from 3M Corporation), perfluorobutyl methyl ether, and perfluorobutyl ethyl ether. The use of a solvent is especially preferred in thin-film coating applications.

Adhesive compositions embodying these proposals are found fully adherent to magnesium alloys, aluminum and aluminum alloys and thus useful as adhesives for automotive-related components made of Mg alloys, Al and Al alloys, and for various types of electrical and electronic components. For example, these adhesive compositions are highly suitable as adhesive sealants and protective coatings for detectors and sensors, such as various types of pressure sensors, gas concentration detectors, and temperature sensors used in automotive control systems. The compositions also lend themselves well to use as protective sealants for sensors exposed to various gases, hot water and chemicals, as adhesives for ink jet printers, as adhesives and sealants for printer heads, and as adhesive sealants and coatings for various types of circuit boards.

### EXAMPLE

Examples and Comparative Examples are given below by way of illustration of the invention and not by way of limitation. All parts are by weight. Viscosity, bond strength and other properties are indicated as values measured at 23°C in accordance with JIS K-6850.

### Example 1

A planetary mixer was charged with 100 parts of a polymer of formula (9) below (viscosity, 10,000 mPa·s; number-average molecular weight, 17,000; vinyl group content, 0.012 mol/100 g). 10 parts of fumed silica that had been surface treated with dimethyldichlorosilane (BET specific surface area, 110 m²/g) was added, and these ingredients were worked together for one hour without heating. The mixer was then heated while the ingredients continued to be worked. After the internal temperature reached 150°C, heat treatment was carried out for two hours under a reduced pressure (60 Torr) while holding the temperature at 150 to 170°C. The mixer contents were then cooled to 40°C or below, following which 0.2 part of a carboxylic anhydride of formula (14) below was added to the mixture, which was worked until the ingredients were uniformly dispersed. Thereafter, the mixture was passed twice through a three-roll mill, yielding a base compound.

To 110.2 parts of the base compound, 0.30 part of a toluene solution of a platinum-divinyltetramethyldisiloxane complex (platinum concentration, 0.5 wt%), 0.30 part of a 50% toluene solution of ethynyl cyclohexanol, 0.1 part of an isocyanurate of formula (10) below, 1.6 parts of a fluorine-bearing organohydrogensiloxane of formula (11) below, 1.1 parts of a fluorine-containing organohydrogensiloxane of formula (12), and 0.3 part of a tackifier of formula (13) below were successively added. The contents were mixed to uniformity, followed by deaeration, yielding a final composition.

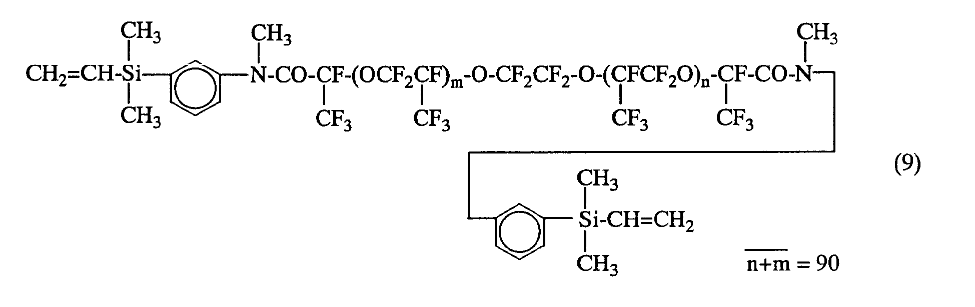

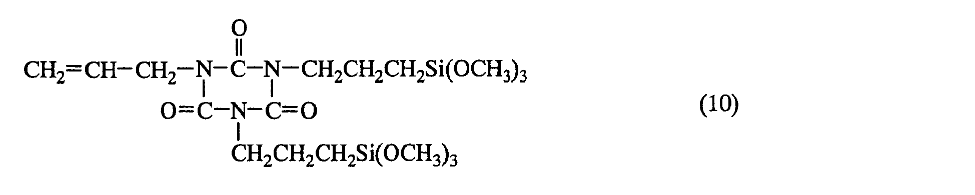

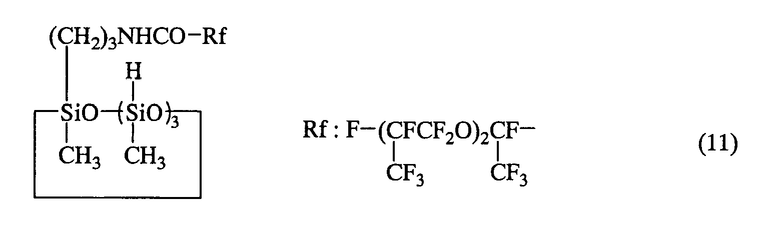

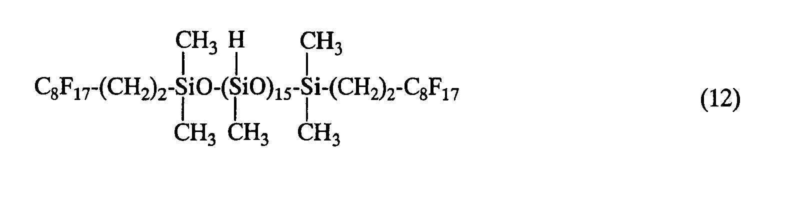

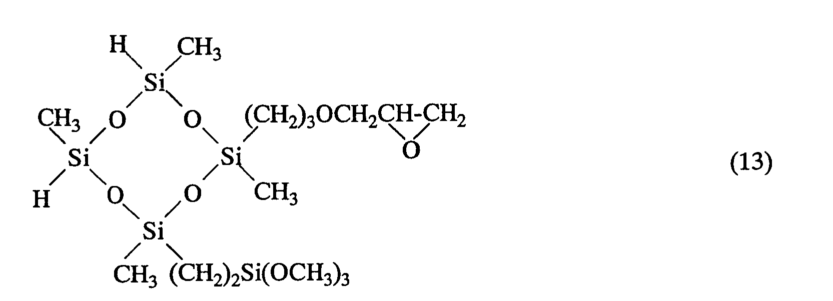

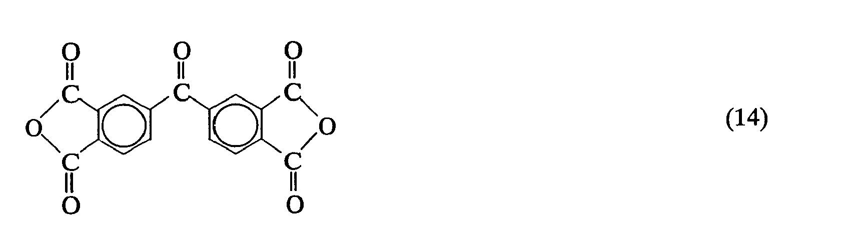

The resulting composition was filled into a cartridge. Next, adhesion test specimens were prepared by sandwiching a 1 mm thick layer of the composition between 100x25 mm test panels of adherends (Al alloy and Mg alloy) arranged with an overlap between their respective edges of 10 mm, and heating at 120°C for 1 hour to cure the composition. These specimens were then subjected to tensile-shear strength tests (pull rate, 50 mm/min), where the bond strength and cohesive failure rate were evaluated. The results are shown in Table 1.

### Example 2

A composition was prepared as in Example 1 aside from using 0.3 part of a carboxylic anhydride of formula (15) below instead of the carboxylic anhydride of formula (14). Evaluations were carried out in the same way as in Example 1. The results are shown in Table 1.

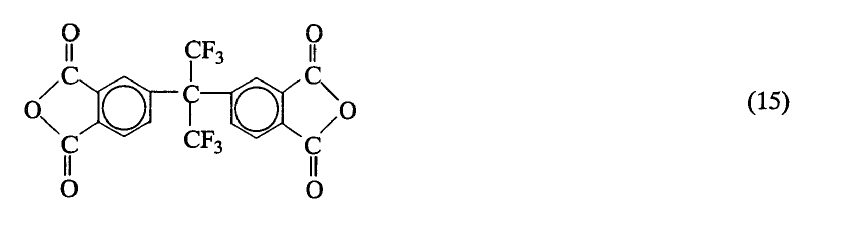

### Example 3

A composition was prepared as in Example 1 aside from using 0.1 part of an isocyanurate of formula (16) below instead of the isocyanurate of formula (10) and 0.6 part of a tackifier of formula (17) below instead of the tackifier of formula (13). Evaluations were carried out in the same way as in Example 1. The results are shown in Table 1.

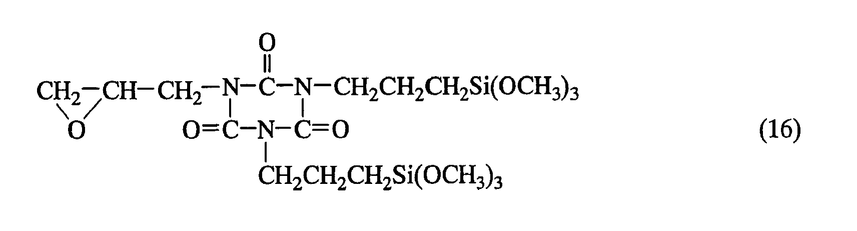

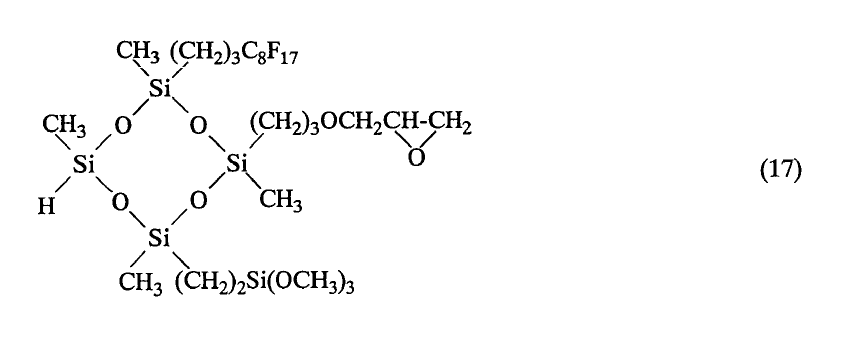

### Example 4

A composition was prepared as in Example 3 aside from using 0.15 part of an isocyanurate of formula (18) below instead of the isocyanurate of formula (16). Evaluations were carried out in the same way as in Example 1. The results are shown in Table 1.

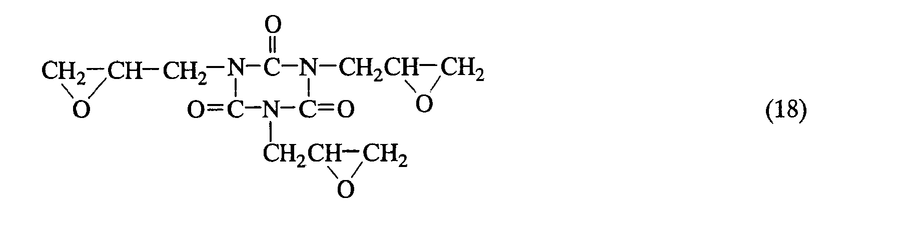

### Example 5

A composition was prepared as in Example 1 aside from using 0.12 part of an isocyanurate of formula (19) below instead of the isocyanurate of formula (10) and 2.5 parts of a tackifier of formula (20) below instead of the tackifier of formula (13). Evaluations were carried out in the same way as in Example 1. The results are shown in Table 1.

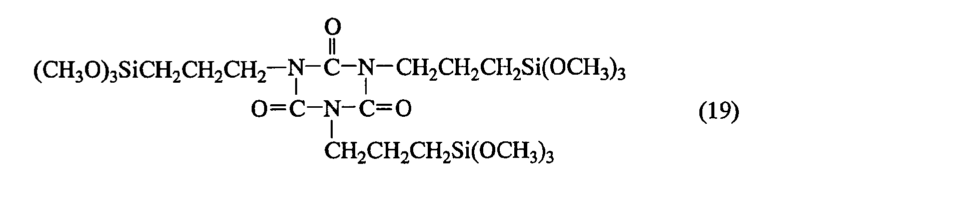

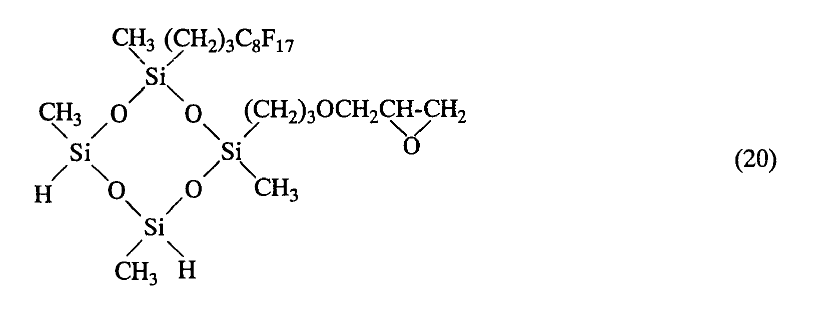

### Example 6

A composition was prepared as in Example 4 aside from using 1.5 parts of a tackifier of formula (21) below instead of the tackifier of formula (17). Evaluations were carried out in the same way as in Example 1. The results are shown in Table 1.

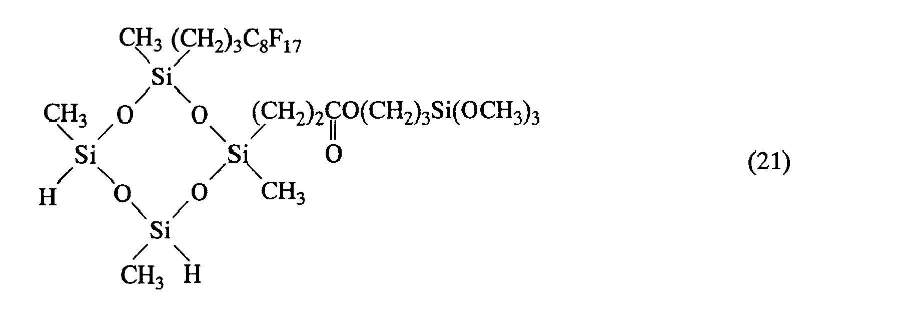

### Comparative Example 1

A composition was prepared as in Example 1 aside from omitting the isocyanurate of formula (10). Evaluations were carried out in the same way as in Example 1. The results are shown in Table 1.

### Comparative Example 2

A composition was prepared as in Example 1 aside from omitting the carboxylic anhydride of formula (14). Evaluations were carried out in the same way as in Example 1. The results are shown in Table 1.

**Table 1**

| Shear bond strength (MPa) | Example | | | | | | Comparative Example | |
|---|---|---|---|---|---|---|---|---|
| | 1 | 2 | 3 | 4 | 5 | 6 | 1 | 2 |
| Al alloy ¹⁾ | 3.0 (100) | 2.9 (100) | 2.8 (100) | 2.9 (100) | 2.8 (100) | 2.9 (100) | 2.3 (80) | 2.2 (70) |
| Mg alloy ²⁾ | 3.3 (100) | 3.1 (100) | 3.0 (100) | 3.1 (100) | 3.2 (100) | 3.0 (100) | 2.8 (90) | 1.0 (30) |

| | | | | | | | | |
|---|---|---|---|---|---|---|---|---|
| Values in parenthesis ( ) indicate cohesive failure rate in percent of surface area. 1) A1050P (classification number) 2) AZ31 (classification number) | | | | | | | | |

It should not need to be said that in this application, where numerical ranges are given, the technical criterion for the upper limit naturally differs from that for the lower limit, so that the upper and lower limits are separate technical proposals.

## Claims

1. An adhesive composition comprising
(A) linear polyfluoro compound containing at least two alkenyl groups per molecule and having a perfluoropolyether structure in the backbone,
(B) fluorine-bearing organohydrogensiloxane containing at least two silicon-bonded hydrogen atoms per molecule,
(C) platinum group catalyst,
(D) hydrophobic silica powder,
(E) isocyanurate having per molecule at least one group selected from among epoxy and trialkoxysilyl groups which is bonded to a nitrogen atom via a carbon atom,
(F) organosiloxane containing per molecule at least one silicon-bonded hydrogen atom and at least one group selected from among epoxy and trialkoxysilyl groups which is bonded to a silicon atom via a carbon atom or carbon and oxygen atoms, and
(G) carboxylic anhydride.

2. The adhesive composition of claim 1, wherein component (A) is a linear polyfluoro compound having the general formula (1):
CH₂=CH-(X)ₐ-Rf¹-(X')ₐ-CH=CH₂ (1)
wherein X is -CH₂-, -CH₂O-, -CH₂OCH₂- or -Y-NR-CO-; Y is -CH₂-or an o-, m- or p-dimethylsilylphenylene group of structural formula (Z): 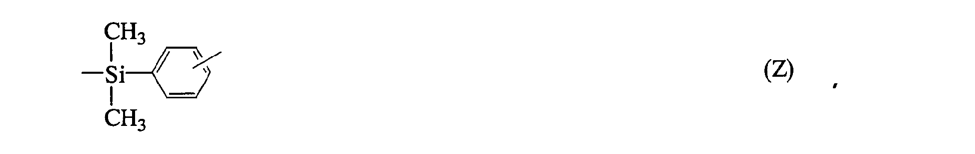 and R is hydrogen or a substituted or unsubstituted monovalent hydrocarbon group;
X' is -CH₂-, -OCH₂-, -CH₂OCH₂- or -CO-NR-Y'-; Y' is -CH₂- or an o-, m- or p-dimethylsilylphenylene group of structural formula (Z'): 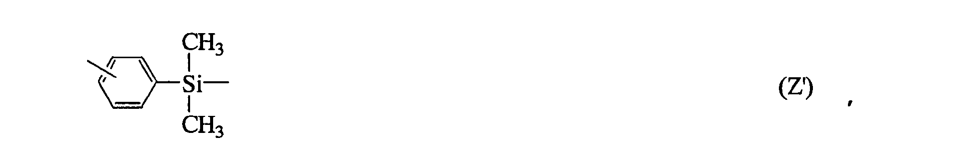 and R is as defined above;
the subscript "a" is independently 0 or 1;
Rf¹ is a divalent perfluoropolyether group of the general formula (i):
-CₜF₂ₜ-[OCF₂CF(CF₃)]ₚ-O-CF₂(CF₂)ᵣCF₂-O-[CF(CF₃)CF₂O]_{q}-CₜF₂ₜ₋ (i)
wherein p and q are integers of 1 to 150, the sum of p and q is 2 to 200 on average, r is an integer of 0 to 6, and t is 2 or 3, or a divalent perfluoropolyether group of the general formula (ii):
-CₜF₂ₜ-[OCF₂CF(CF₃)]ᵤ-(OCF₂)ᵥ-OCₜF₂ₜ- (ii)
wherein u is an integer of 1 to 200, v is an integer of 1 to 50, and t is as defined above.

3. The adhesive composition of claim 1 or 2, wherein the fluorine-bearing organohydrogensiloxane (B) has on the molecule at least one group selected from among monovalent perfluoroalkyl groups, monovalent perfluorooxyalkyl groups, divalent perfluoroalkylene groups and divalent perfluorooxyalkylene groups.

4. The adhesive composition of any one of claims 1 to 3, wherein the isocyanurate (E) has the general formula (2): 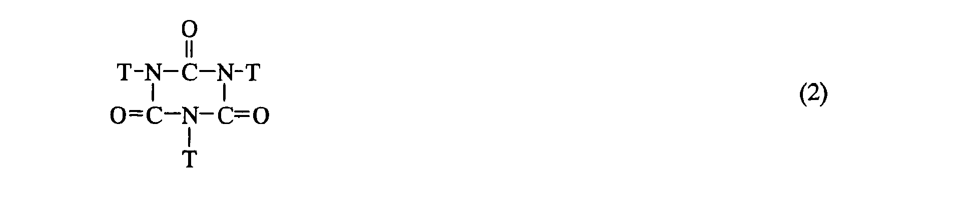 wherein T is each independently a lower alkyl group, an aryl group, an aralkyl group, a monofunctional lower alkenyl group, an organic group of the formula: (R¹O)₃Si-R²- wherein R¹ is a lower alkyl group and R² is a lower alkylene group, or an organic group of the formula: Q-R³- wherein Q is an epoxy group and R³ is a lower alkylene group, with the proviso that at least one T is a (R¹O)₃Si-R²- or Q-R³- group.

5. The adhesive composition of any one of claims 1 to 4, wherein the organosiloxane (F) further contains per molecule at least one monovalent perfluoroalkyl or monovalent perfluorooxyalkyl group bonded to a silicon atom via a carbon atom or carbon and oxygen atoms.

6. A composition according to any one of claims 1 to 5, in one-part or two-part form.

7. A method comprising the preparation of a composition according to any one of claims 1 to 6, by combining the ingredients thereof.

8. The use of a composition according to any one of claims 1 to 6 as an adhesive, adhesive sealant or adhesive coating.

9. Use according to claim 9 in which the composition is adhered to a substrate of Mg alloy, Al or Al alloy.

10. Use according to claim 8 or 9, for forming a gasket for an automobile engine.
